# EUROPEAN PATENT APPLICATION

(11) **EP 2 099 222 A1**
(43) Date of publication of application: **09.09.2009**
(21) Application number: 08783879.3
(22) Date of filing: 06.08.2008
(51) Int. Cl.: H04N 7/173

(54) **A METHOD, APPARATUS AND SYSTEM FOR PERFORMING REDUNDANT BACKUP ON VIDEO SERVICE**

(30) Priority: 09.10.2007 CN 200710164302
(71) Applicant: Huawei Technologies Co., Ltd., Longgang District, Shenzhen Guangdong 518129 (CN)
(72) Inventor: YANG, Tao, Guangdong 518129 (CN)
(74) Representative: Pfenning, Meinig & Partner GbR
(86) International application number: PCT/CN2008/071886
(87) International publication number: WO 2009/046646

(57) **Abstract**

A method, apparatus and system for redundancy backup of video services are provided. The method includes: receiving a data stream from a video server; stopping delivering the data stream to an Internet Protocol (IP) network if determining that the data stream is abnormal; and triggering the IP network to change delivery of the data stream over to a redundant video server. With the method provided by the present invention, when the data stream played by the Near Video on Demand (nVOD) system is detected as abnormal, a route changeover can be completed so that the program stream of a redundant nVOD server is delivered to the IP network.

## Description

### Field of the Invention

The present invention relates to streaming technologies, and in particular, to a method, apparatus and system for redundancy backup of video services.

### Background of the Invention

With the rapid development of audio and video streaming technologies and computer network technologies, Internet Protocol Television (IPTV) has become an important form of television service. While providing high-definition digital TV signals, IPTV is also able to deliver personalized services. Near Video On Demand (nVOD) is often adopted in a current IPTV system, which meets VOD-like service needs by means of multicast. However, nVOD is essentially different from Video On Demand (VOD). VOD delivers video and audio streams in unicast mode to a user who demands them; nVOD delivers video and audio streams to a user end in multicast mode, which is similar to live broadcast over the Internet. With nVOD, many users can watch the same TV program. Therefore, reliability of an nVOD system is a primary requirement for provision of nVOD services.

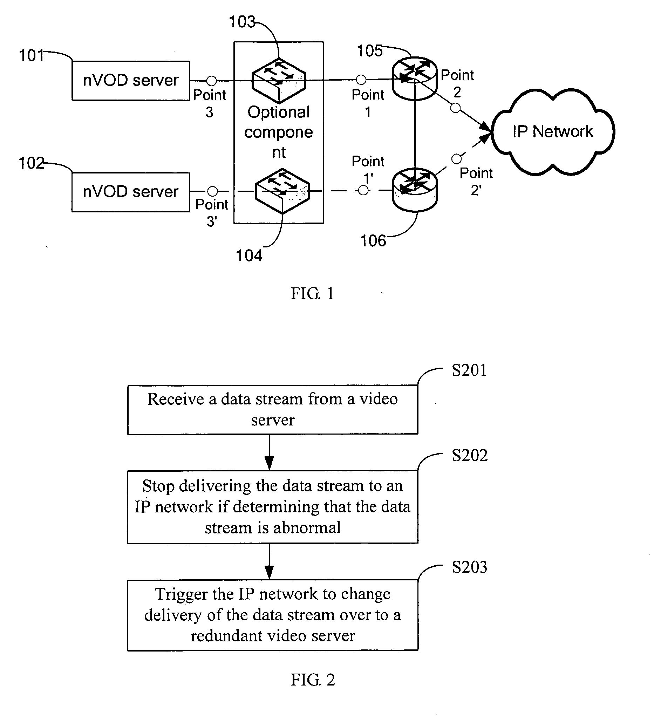

When an nVOD system is deployed, redundancy backup is often adopted to assure the required reliability of the nVOD system. FIG. 1 shows an nVOD system for redundancy backup in the prior art, where an nVOD server 101 and an nVOD server 102 provide the same nVOD program in multicast mode simultaneously. The nVOD server 101 and the nVOD server 102 are connected to a switch 103 and a switch 104 respectively, where the switch 103 and the switch 104 are connected to a router 105 and a router 106 respectively. The nVOD servers deliver multicast streams of the nVOD program to an IP network via the respective switches and routers and the IP network then forwards the program to end users. The switch 103 and the switch 104 are optional components, which are not deployed in some nVOD systems.

The switches and routers all support the Protocol Independent Multicast-Sparse Mode (PIM-SM). The nVOD server 101 and the nVOD server 102 provide the same multicast stream. One stream is chosen and sent to the IP network through route interaction with the router 105 and the router 106. Suppose the program stream provided by the nVOD server 101 is currently delivered to the IP network via router 103. When a fault occurs, the system status and processing are as follows:
Fault at point 1: If the switch 103 is faulty or the connection between the switch 103 and the router 105 is broken, the router 105 may detect the event and notify the router 106 of the event; the router 106 may be switched to deliver the program stream provided by the nVOD server 102 to the IP network.

Fault at point 2: If the router 105 is faulty or the connection between the router 105 and the IP network is broken, the router 106 may detect the event and be switched to deliver the program stream provided by the nVOD server 102 to the IP network.

Fault at point 1' or 2': Because currently the program stream provided by the nVOD server 101 is delivered to the IP network, a fault at point 1' or 2' may not hinder the nVOD system from streaming the program to end users and therefore the program stream may not be interrupted.

Application layer fault at point 3: If the streaming application of the nVOD server 101 is abnormal, or the quality of the program stream is poor, for example, if the packet loss rate is high, because the network connection in the nVOD system is normal, the router may not detect the fault; as a result, the router 106 may not take the place of the router 105 to deliver the program stream of the nVOD server 102 to the IP network. When an application layer fault occurs at point 3', the same happens as an application layer fault occurs at point 3.

In a word, in the current nVOD redundancy system, through backup of the network path, a router checks whether the nVOD program transport link in direct connection with the router is normal and when the transport link fails, the backup link is activated to deliver the backup program provided by the redundant nVOD server to the IP network. However, when the program stream provided by the nVOD server is abnormal, for example, when the stream is subject to serious packet loss or packet error, or when the streaming application of the nVOD server is unable to deliver the program stream, the current nVOD redundancy system may not detect the error and therefore the redundant nVOD server may not take the place of the faulty server to deliver the backup nVOD program stream.

### Summary of the Invention

Embodiments of the present invention provide a method, apparatus and system for redundancy backup of video services so that the backup nVOD services are delivered when the program streams delivered by the nVOD server are abnormal.

A method for redundancy backup of video services includes: receiving a data stream from a video server; stopping delivering the data stream to an IP network if determining that the data stream is abnormal; and triggering the IP network to change delivery of the data stream over to a redundant video server.

An apparatus for redundancy backup of video services includes: a receiving unit, adapted to receive a data stream of a video server; a determining unit, adapted to determine whether the data stream is abnormal; a controlling unit, adapted to stop delivering the data stream to an IP network when the data stream is abnormal; and a triggering unit, adapted to trigger the IP network to change delivery of the data stream over to a redundant video server when the controlling unit stops delivering the data stream to the IP network.

A system for redundancy backup of video services includes a video server, a redundant video server, and a router, where the video server and the redundant video server receive a data stream delivered by each other and include the foregoing apparatus for redundancy backup of video services.

A system for redundancy backup of video services includes a video server, a redundant video server, and a router, where the router receives data streams delivered by the video server and the redundant video server and includes the foregoing apparatus for redundancy backup of video services.

A system for redundancy backup of video services includes a video server, a redundant video server, a switch, and a router, where the switch receives data streams delivered by the video server and the redundant video server, delivers the data streams to the router, and includes the foregoing apparatus for redundancy backup of video services.

In the embodiments of the present invention, the program stream delivered by the nVOD server is checked and if the program stream is abnormal, the backup program stream of the redundant nVOD server is delivered to the IP network. Thus the embodiments may implement redundancy backup of the nVOD system.

### Brief Description of the Drawings

FIG. 1 shows a network structure of an nVOD system for redundancy backup in a

### prior art;

FIG. 2 shows a procedure of a method for redundancy backup of video services according to an embodiment of the invention;

FIG. 3 shows a network structure in an embodiment of the invention;

FIG. 4 shows a network structure in another embodiment of the invention;

FIG. 5 shows a network structure in still another embodiment of the invention;

FIG. 6 shows a structure of an apparatus for redundancy backup of video services according to an embodiment of the invention;

FIG. 7 shows a structure of a system for redundancy backup of video services according to an embodiment of the invention;

FIG. 8 shows a structure of a system for redundancy backup of video services according to another embodiment of the invention; and

FIG. 9 shows a structure of a system for redundancy backup of video services according to still another embodiment of the invention.

### Detailed Description of the Invention

Embodiments of the present invention are described hereinafter in detail with reference to the accompanying drawings. A procedure of a method for redundancy backup of video services is illustrated in FIG. 2 according to an embodiment of the invention. The procedure includes the following steps:

S201. A data stream is received from a video server.

S202. The sending of the data stream to an IP network is stopped if determining the stream state is abnormal.

**S**203. The IP network is triggered to change the delivery of the data stream over to a redundant video server.

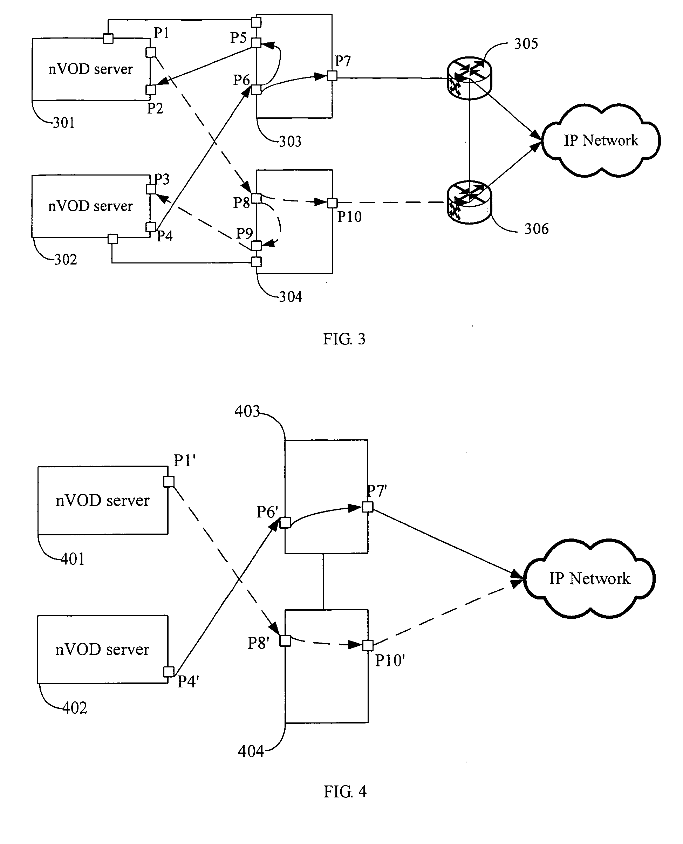

In an embodiment of the invention, two switches are deployed for delivery of program streams of two nVOD servers respectively. The two switches are connected to the IP network respectively by way of two routers. As shown in FIG. 3, according to this embodiment, the backup stream of an nVOD program is delivered in the following process:

An nVOD server 301 delivers a program stream to port P8 of a switch 304 via port P1; an nVOD server 302 delivers a program stream to port P6 of a switch 303 via port P4. The program stream delivered by the nVOD server 301 is the same as the stream delivered by the nVOD server 302.

The switch 304 plans its ports P8, P9 and P10 in one Virtual Local Area Network (VLAN). P8 delivers the received program stream to P9 and P10; P9 forwards the program stream to the nVOD server 302; P10 forwards the program stream to a router 306. Accordingly, the switch 303 delivers the program stream from the nVOD server 302 to the nVOD server 301 via P5 and delivers the program stream of the nVOD server 302 to a router 305.

The router 305 and the router 306 are interconnected for route negotiation and choose the program stream delivered by one nVOD server as a valid program stream and forward the chosen program stream to the IP network. For example, the chosen program stream is the program stream delivered by the nVOD server 301, If the valid program stream delivered by the nVOD server 301 becomes abnormal, for example, if the packet loss rate of the program stream is high, the nVOD server 302 may detect the abnormality of the program stream according to the program stream received by the nVOD server 302 via P9 of the switch 304 from the nVOD server 301 and disable P10 of the switch 304 via the Simple Network Management Protocol (SNMP).

After the router 306 detects that P10 is disabled, the router 306 notifies the IP network to change over the route so that the program stream received by the switch 303 from the nVOD server 302 may be delivered to the IP network. When the program stream of the nVOD server 301 becomes abnormal, the nVOD server 302 detects the abnormality and triggers link changeover of the network so that the backup program stream is delivered to the IP network.

In this embodiment, two switches are deployed and respectively connected to two nVOD servers. In practice, one switch may be deployed and connected to the two nVOD servers to receive the program streams of the two servers and deliver the program streams to the routers. The routers choose one of the program streams as a valid program stream and deliver the valid program stream to the IP network. The switch also forwards the program stream delivered by one nVOD server to the other of the two nVOD servers. The two nVOD servers check the program stream delivered by each other. If the valid program stream delivered to the IP network becomes abnormal, the nVOD servers may detect the abnormal event and disable the transmitting port of the valid program stream via the switch, and trigger the IP network to choose the transport link of the backup program stream. With the method according to this embodiment, a program stream can be normally delivered to an IP network when the program stream is abnormal or when the streaming application runs abnormally.

Based on the network connections in the embodiment, the switch 304 and the switch 305 may check the nVOD programs respectively received by the switches without the need to forward the program streams to the respective nVOD servers. For example, after the switch 304 detects that the program stream it receives from the nVOD server 301 is abnormal, the switch 304 disables its port P10 directly without forwarding the program stream to the router 306. After the router 306 detects that P10 is disabled, the IP network changes over the route so that the program stream received by the switch 303 from the nVOD server 302 may be delivered to the IP network. Thus the backup program stream is delivered to the IP network.

When the program stream delivered by the nVOD server 301 and the nVOD server 302 is checked according to this embodiment of the invention, if the program stream is abnormal, the backup program stream can be delivered to the IP network, and thus normal delivery of the nVOD program stream is assured.

In another embodiment of the invention, two redundant nVOD servers are connected respectively to two routers, which are connected to an IP network. The two routers are communicate with a multicast stream detection controller. As shown in FIG. 4, according to this embodiment, the backup stream of an nVOD program is delivered in the following process:

An nVOD server 401 delivers a program stream to port P8' of a router 404 via port P1'; an nVOD server 402 delivers a program stream to port P6' of a router 303 via port P4'. The program stream delivered by the nVOD server 401 is the same as the stream delivered by the nVOD server 402.

The router 403 and the router 404 are interconnected for route negotiation and choose the program stream delivered by one nVOD server as a valid program stream, and forward the chosen program stream to the IP network. For example, the chosen program stream is the program stream delivered by the nVOD server 401., If the router 404 detects that the streaming application of the nVOD server 401 is abnormal so that the valid program stream cannot be played, or detects that the packet loss rate of the valid program stream is higher than a preset value, the router 404 disables its port P10'.

After the router 404 disables P10', the router 404 notifies the IP network to change over the route so that the program stream received by the router 403 from the nVOD server 402 may be delivered to the IP network. Thereby, when the streaming application of the nVOD server 401 becomes abnormal, the abnormal event may be detected and the backup program stream may be delivered to the IP network.

In this embodiment of the invention, the routers 403 and 404 check the program streams delivered by the nVOD servers. In practice, one dedicated stream detector may be deployed to check the program streams delivered by the nVOD servers. The dedicated stream detector is connected to the two routers to receive and check the program streams respectively delivered by the two nVOD servers. If the stream detector detects that the valid program stream forwarded by a router to the IP network is abnormal, the stream detector notifies the router to disable the port of the valid program stream and triggers a link changeover of the network so that the backup program stream is delivered to the IP network. The implementation principle is already described in the foregoing two embodiments of the invention.

In the foregoing two embodiments, two routers are connected to two nVOD servers to forward the program stream to the IP network. In another embodiment of the invention, only one router is adopted to receive program streams delivered by both nVOD servers and choose one program stream as a valid stream, and deliver the valid stream to the IP network. The router checks the program stream. If detecting that the valid program stream is abnormal, the router disables the transmitting port of the valid program stream and triggers a link changeover of the network so that the backup program stream is delivered to the IP network.

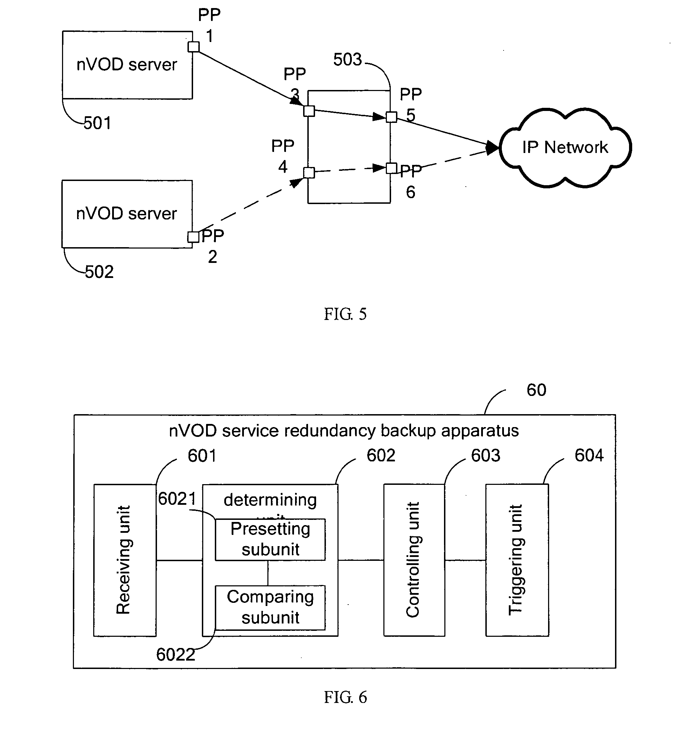

The network structure according to an embodiment of the invention is illustrated in FIG. 5, where the procedure for implementing delivery of a redundant backup nVOD program stream is as follows:

An nVOD server 501 delivers a program stream to port PP3 of a router 503 via port PP1; an nVOD server 502 delivers a program stream to port PP4 of the router 503 via port PP2. The program stream delivered by the nVOD server 501 is the same as the stream delivered by the nVOD server 502.

The router 503 selects the transport path for the two received program streams. For example, the router 503 chooses the program steam of the nVOD server 501 as the valid program stream and delivers the valid program stream to an IP network via port PP5 of the router 503.

The router 503 checks the valid program stream delivered to the IP network and disables PP5 if the delivered valid program stream is abnormal.
After the router 503 disables PP5, the router 503 notifies the IP network to change over the route so that the program stream delivered by the nVOD server 502 may be delivered to the IP network via port PP6 of the router 503. Thereby, when the program stream of the nVOD server 501 is abnormal, the abnormal event can be detected and the backup program stream can be delivered to the IP network.

With the nVOD service redundancy backup method provided by the embodiments of the present invention, when the program stream delivered by the nVOD server is abnormal, for example, in the case of serious packet loss and packet error, or when the streaming application of the nVOD server is abnormal and unable to deliver the program stream, the abnormal event can be detected and the backup nVOD program stream is delivered.

Accordingly, an nVOD service redundancy backup apparatus is provided according to an embodiment of the invention, its structure illustrated in FIG. 6. The nVOD service redundancy backup apparatus 60 includes a receiving unit 601, a determining unit 602, a controlling unit 603, and a triggering unit 604. In addition, the determining unit 602 includes a presetting subunit 6021 and a comparing subunit 6022.

The receiving unit 601 is adapted to receive a data stream from a video server; the determining unit 602 is adapted to determine whether the data stream is normal; the controlling unit 603 is adapted to stop delivering the data stream to an IP network when the data stream is abnormal; the triggering unit 604 is adapted to trigger the IP network to change the delivery of the data stream to a redundant video server when the controlling unit 603 stops delivering the data stream to the IP network. The presetting subunit 6021 is adapted to preset a maximum packet loss rate and a maximum packet error rate for the data stream; the comparing subunit 6022 is adapted to compare the packet loss rate or packet error rate of the valid data stream with the packet loss rate or packet error rate preset by the presetting subunit 6021 and make a decision according to the comparison result. With the apparatus provided by the embodiment of the invention, the redundancy backup delivery in an nVOD system is implemented as follows:

A video server delivers a program stream to an IP network to provide an nVOD service. The receiving unit 601 receives the program stream delivered by the video server; the comparing subunit 6022 of the determining unit 602 compares the packet loss rate or packet error rate of the program steam with the packet loss rate or packet error preset by the presetting subunit 6021; if the packet loss rate or packet error rate of the program steam is higher than the preset packet loss rate or packet error rate, or if the receiving unit 601 does not receive the program stream, the determining unit 602 determines that the program stream is abnormal and notifies the -controlling unit 603 to stop delivering the program stream to the IP network; the triggering unit 604 triggers the IP network to change over the route when the controlling unit 603 stops delivering the program stream so as to change the delivery of the program stream over to the transport path of the redundant video server. Therefore, when the program stream delivered by the video server is abnormal, for example, when the packet loss rate of the program stream is too high, or the streaming application of the video server is down, the nVOD service redundancy backup apparatus is able to detect the fault and deliver the program stream of the redundant video server to the IP network.

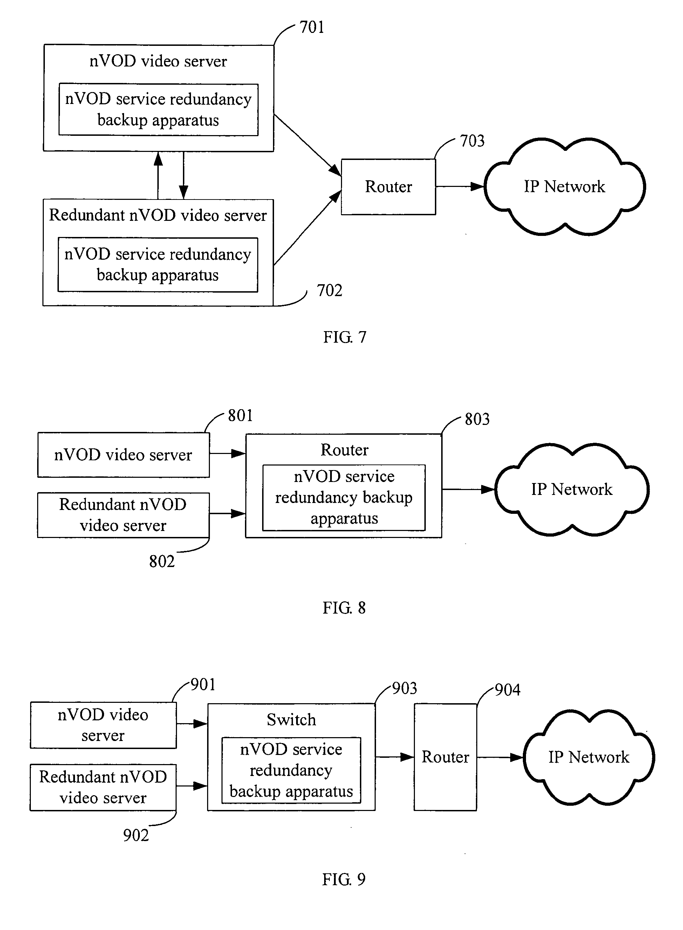

Accordingly, an nVOD redundancy backup system is provided in an embodiment of the invention. As shown in FIG. 7, the nVOD redundancy backup system includes an nVOD video server 701, a redundant nVOD video server 702, and a router 703. The video server and the redundant video server receive the program stream of each other and include the nVOD redundancy backup apparatus provided in the preceding embodiments of the invention. The delivery of the redundant backup program stream is the same as the implementation of the nVOD redundancy backup apparatus.

Accordingly, a second nVOD redundancy backup system is provided in an embodiment of the invention. As shown in FIG. 8, the nVOD redundancy backup system includes an nVOD video server 801, a redundant nVOD video server 802, and a router 803. The router 803 receives the program streams of the video server and the redundant video server and includes the nVOD redundancy backup apparatus provided in the preceding embodiments of the invention. The delivery of the redundant backup program stream is the same as the implementation of the nVOD redundancy backup apparatus.
Accordingly, a third nVOD redundancy backup system is provided in an embodiment of the invention. As shown in FIG. 9, the nVOD redundancy backup system includes an nVOD video server 901, a redundant nVOD video server 902, a switch 903, and a router 904. The switch 903 receives the program streams of the video server and the redundant video server and forwards the program streams to the router 904. The switch 903 includes the nVOD redundancy backup apparatus provided in the preceding embodiments of the invention. The delivery of the redundant backup program stream is the same as the implementation of the nVOD redundancy backup apparatus.

It is understandable to those skilled in the art that all or part of the steps in the methods according to the preceding embodiments may be performed by hardware instructed by a program. The program may be stored in a computer readable storage medium, such as a Read-Only Memory/Random Access Memory (ROM/RAM), a magnetic disk, and a compact disk.

Although the invention has been described through exemplary embodiments, the invention is not limited to such embodiments. It is apparent that those skilled in the art can make various modifications and variations to the invention without departing from the scope of the invention. The invention is intended to cover the modifications and variations provided that they fall in the scope of protection defined by the following claims or their equivalents.

## Claims

1. A method for redundancy backup of video services, comprising:
receiving a data stream from a video server;
stopping delivering the data stream to an Internet Protocol (IP) network if determining that the data stream is abnormal; and
triggering the IP network to change delivery of the data stream over to a redundant video server.

2. The method according to claim 1, wherein the receiving the data stream from the video server comprises:
receiving, by the video server and the redundant video server, the same data stream respectively delivered by each other.

3. The method according to claim 2, wherein the determining that the data stream is abnormal comprises:
determining, by the redundant video server, whether the data stream delivered by the video server is normal.

4. The method according to claim 1, wherein the receiving the data stream from the video server comprises:
receiving, by a router, the same data stream respectively delivered by the video server and the redundant video server.

5. The method according to claim 4, wherein the determining that the data stream is abnormal comprises:
determining, by the router, whether the data stream delivered by the video server is normal.

6. The method according to any of claims 1-5, wherein the stopping delivering the data stream to the IP network comprises:
disabling a port that delivers the data stream to the IP network.

7. The method according to any of claims 1-5, wherein abnormality of the data stream comprises at least one of:
packet loss rate or packet error rate of the data stream higher than a preset value; and
failure to receive the data stream.

8. An apparatus for redundancy backup of video services, comprising:
a receiving unit, adapted to receive a data stream of a video server;
a determining unit, adapted to determine whether the data stream is abnormal;
a controlling unit, adapted to stop delivering the data stream to an Internet Protocol (IP) network when the data stream is abnormal; and
a triggering unit, adapted to trigger the IP network to change delivery of the data stream over to a redundant video server when the controlling unit stops delivering the data stream to the IP network.

9. The apparatus according to claim 8, wherein the determining unit comprises:
a presetting subunit, adapted to preset a maximum packet loss rate and a maximum packet error rate for the data stream; and
a comparing subunit, adapted to compare a packet loss rate or a packet error rate of a valid data stream with the packet loss rate or packet error rate preset by the presetting subunit and determine whether the data stream is abnormal according to a comparison result.

10. A system for redundancy backup of video services, comprising a video server, a redundant video server, and a router, wherein the video server and the redundant video server receive a data stream delivered by each other and comprise the apparatus for redundancy backup of video services according to claim 8 or 9.

11. A system for redundancy backup of video services, comprising a video server, a redundant video server, and a router, wherein the router receives data streams delivered by the video server and the redundant video server and comprises the apparatus for redundancy backup of video services according to claim 8 or 9.

12. A system for redundancy backup of video services, comprising a video server, a redundant video server, a switch, and a router, wherein the switch receives data streams delivered by the video server and the redundant video server and delivers the data streams to the router, and comprises the apparatus for redundancy backup of video services according to claim 8 or 9.
